# EUROPÄISCHE PATENTSCHRIFT

(11) **EP 0 621 739 B1**
(45) Veröffentlichungstag und Bekanntmachung des Hinweises auf die Patenterteilung: **03.11.1999**
(21) Anmeldenummer: 94105554.3
(22) Anmeldetag: 11.04.1994
(51) Int. Cl.: H05B 6/12, H05B 1/02, A47J 27/00

(54) **Kochsystem**
Cooking system
Système de cuisson

(30) Priorität: 21.04.1993 DE 4312975; 24.03.1994 DE 4410263
(43) Veröffentlichungstag der Anmeldung: 26.10.1994
(73) Patentinhaber: Herchenbach, Wolfgang, Dr., D-86938 Schondorf/Ammersee (DE)
(72) Erfinder: Herchenbach, Wolfgang, Dr., D-86938 Schondorf/Ammersee (DE)

(56) Entgegenhaltungen:
- DE-A- 1 920 778
- DE-A- 2 306 037
- FR-A- 2 417 725
- FR-A- 2 588 711
- GB-A- 810 728
- GB-A- 2 010 054
- PATENT ABSTRACTS OF JAPAN vol. 13, no. 288 (E-781) 30. Juni 1989 & JP-A-01 072 490 (TOSHIBA CORP.) 17. März 1989

## Beschreibung

Die Erfindung betrifft ein Kochsystem, bestehend aus einem Kochfeld und einem Kochgeschirr.

Aufgabe der Erfindung ist es, ein Induktions-Kochsystem zu schaffen, bei dem sichergestellt ist, dass eine temperaturempfindliche Kochfläche (z.B. aus Holz, Kunststoff, Keramik, Schiefer, Marmor oder Granit) keine unzulässig hohen Temperaturen annimmt. Ausserdem soll ein Kochgeschirr zur Verfügung gestellt werden, mit dem auch auf einem erfindungsgemässen Induktionsherd ein temperaturgeregelter Kochvorgang möglich ist.

FR-A-2 417 725 offenbart ein Induktions-Kochfeld, bei dem eine Induktionsspule unmittelbar an der Unterseite der Kochfläche angeordnet ist. Zwischen Unterseite der Kochfläche mit der Induktionsspule und den für die Induktionsbeheizung notwendigen Schalt- und Steuerelementen ist ein Spalt vorhanden, in dem ein Kühlluftstrom durch ein Gebläse bewirkt wird.

Bei den am Markt befindlichen Induktions-Kochfeldern bestehen die Kochflächen bisher durchweg aus hochhitzefester und gegen Temperaturunterschiede völlig unempfindlicher Glaskeramik (z. B. "Ceran").

Da das den Kochgeschirrboden erhitzende Induktionsfeld die Kochfläche durchdringt ohne sie zu erhitzen ist schon vorgeschlagen worden, die Kochfläche aus Kunststoff herzustellen (DE 3817438 A1) und zur Abführung der vom Kochgeschirrboden ausgehenden Rückwärme von unten mittels eines Luftstroms zu kühlen. So kann z.B. eine normale Küchenarbeitsplatte oder die Abtropffläche einer Kunststoff-Küchenspüle gleichzeitig als nahtlos durchgehende Kochfläche dienen.

Es hat sich jedoch ergeben, dass bei einigen für Küchenarbeitsplatten und Küchenspülen verwendeten Materialien eine Kühlung von unten allein nicht ausreicht, weil ihre Wärmebeständigkeit bzw. Temperaturwechselfestigkeit bereits in der Grössenordnung von ca. 100 °C nachlässt, während Kochgeschirrböden beim Braten bis zu ca. 250 °C heiss werden können.

Es sind auch Kochgeschirre bekannt, welche mit einer isolierenden Schicht am Boden bzw. an den Wänden bedeckt sind (DE 2453169, A1, DE 2906912 A1). Dadurch wird neben einer Energieeinsparung auch bewirkt, dass die Temperaturübertragung auf die Kochfläche reduziert wird, wodurch insbesondere temperaturempfindliche Kochflächen geschützt werden sollen. Bei diesen bekannten Systemen können jedoch trotzdem Überhitzungen der Kochfläche auftreten, da einerseits eine wirksame Wärmeabführung durch Kühlung der Kochfläche nicht vorgesehen ist, andererseits das Kochgeschirr überhitzt werden kann, da wegen der Isolierschicht eine Temperaturregelung über die Kochfläche nicht möglich ist.

Der erste Teil der Erfindungsaufgabe, eine Überhitzung der temperaturempfindlichen Kochfläche auszuschliessen, wird dadurch gelöst, dass eine wärmeisolierende Schicht zwischen der Oberseite der Kochfläche und dem sich erhitzenden Boden des Kochgeschirrs angeordnet ist, und zwischen Induktionsspule und Unterseite der Kochfläche ein Spalt vorhanden ist, in dem ein Kühlluftstrom durch ein druckstarkes Gebläse bewirkt wird, das unmittelbar mit dem offenen Zentrum der Induktionsspule verbunden ist.

Die Wärmeleitfähigkeit der isolierenden Schicht sollte möglichst geringer sein als die der Kochfläche selbst, sodass der grösste Teil des Wärmegefälles zwischen Kochgeschirrboden und gekühlter Kochflächenunterseite in der wärmeisolierenden Schicht liegt. In einer solchen Anordnung wird die Kochfläche, effektive Kühlung vorausgesetzt, auch beim Braten nur noch handwarm. Darüberhinaus wird Energie eingespart, ein Vorteil, der auch bei induktivem Kochen auf Ceranfeldern genutztwerden kann.

Die wärmeisolierende Schicht kann auf die Kochflächenoberseite aufgebracht sein. Sie markiert dann gleichzeitig den Kochbereich. Dabei ist vorteilhaft, dass kein spezielles Kochgeschirr benötigt wird. Sie kann aber auch von aussen zumindest auf den Boden, ggf. auch auf die Wände des Kochgeschirrs aufgebracht sein. Dies hat den Vorteil, dass die Kochfläche mit der Küchenarbeitsplatte eine nahtlos durchgehende, glatte Oberfläche bildet, wobei der Kochbereich durch Farbmarkierung, Sandstrahlen, kleine Distanznoppen o.dergl. gekennzeichnet werden kann. Ein solches beschichtetes Kochgeschirr ist auch besonders tischfreundlich. Die Wärmeübertragung auf die Tischplatte ist stark reduziert, Verkratzungen sind ausgeschlossen. Man kann überall anfassen, ohne sich zu verbrennen.

Wichtig ist, dass der Spalt zwischen Induktionsspule und Unterseite der Kochfläche, der aus Gründen der Induktionsübertragung nur wenige Millimeter betragen darf, wirksam gekühlt wird. Nur sehr druckstarke Gebläse können ausreichende Luftmengen durch diesen Kühlspalt treiben. Infrage kommen insbesondere Radialgebläse mit geschlossenem Lüfterrad, die zumindest mehrere Zentimeter Wassersäule als Druck aufbauen können. Dabei wird das Gebläse unmittelbar mit dem offenen Zentrum der Induktionsspule verbunden, und zwar vorzugsweise mit seiner Ansaugöffnung. So wird erreicht, dass im Spulenzentrum angesaugte Luft gleichmässig radial vom äusseren Spulenumfang her durch den Kühlspalt zum Zentrum strömt, sodass der Aussenumfang der Kochfläche mit Luft von Raumtemperatur gekühlt wird, die dann zum Zentrum hin immer wärmer wird. Dies dient der Verminderung von Wärmespannungen zwischen der ringsum auf Raumtemperatur befindlichen Küchenarbeitsplatte und dem zum Zentrum hin stetig wärmer werdenden Kochflächenbereich. Gleichzeitig weist die saugseitige Anordnung der Kühlung den Vorteil auf, dass die Kühlluft zuerst die Kochfläche kühlt und dann erst die Verlustwärme des Gebläsemotors abführt, sodass sich an der Kochflächenunterseite die niedrigstmögliche Kühllufttemperatur ergibt. Dabei kann aus Raumspargründen der Antriebsmotor des Kühlgebläses als Aussenläufermotor ausgebildet und in der zentralen Ansaugöffnung des geschlossenen Lüfterrades angeordnet sein.

Die Ausblasseite des Kühlgebläses kann dann noch in die Stromversorgung für die Induktionsspule geführt werden, sodass dafür kein eigenes Kühlgebläse benötigt wird.

Zur mechanischen Verstärkung der Kochfläche, die nur ca. 2-4 mm Stärke aufweist, kann diese auf ihrer Unterseite mit Rippen versehen sein, die radial verlaufen, den Kühlluftspalt von ca. 2-3 mm Stärke überbrücken und mit der Induktionsspule verbunden bzw. verklebt sind.

Durch die zwischen Kochflächenoberseite und dem sich erhitzenden Kochgeschirrboden angeordnete wärmeisolierende Schicht sowie die starke Kühlung der Kochfläche von unten wird die Kochflächenunterseite wärmetechnisch weitgehend von der Temperatur des Kochguts entkoppelt, sodass es nicht mehr möglich ist, die Kochguttemperatur durch Abfühlen auf der Kochflächenunterseite thermostatisch feinfühlig zu regeln.

Daraus ergibt sich der zweite Teil der Erfindungsaufgabe, dessen Lösung in einer vom Kochgeschirrboden ausgehenden Kochgut-Temperatur-Regelvorrichtung besteht, wobei unter dem Kochfeld mindestens ein magnetisch betätigbarer Kontakt (Reedkontakt) als Schaltstelle für die Leistungszufuhr angeordnet ist, und ein flüssigkeitsgefüllter Temperaturfühler vorgesehen ist, der seitlich am Boden oder in einer horizontalen Bohrung im Boden des Kochgeschirrs angeordnet ist und bei Erhitzung über die eingestellte Temperatur hinaus über einen Ausdehnungskörper einen seitlich am Kochgeschirr angeordneten Permanentmagneten bewegt, z.B. anhebt und so den Kontakt betätigt, der die Kochleistung abschaltet, und der bei Unterschreiten der eingestellten Temperatur den Permanentmagneten wieder zurückbewegt, z.B. absenkt, sodass der Kontakt die Kochleistung wieder einschaltet.

Dieser Teil der Erfindung kann bei allen Kochsystemen angewendet werden, deren Kochflächen für magnetische und / oder elektrische Felder durchlässig sind.

Zwar ist schon vorgeschlagen worden (US-Patent 4,617,441), die Kochguttemperatur mit Lichtsignal durch die Kochfläche hindurch zu regeln. Dabei wird jedoch nicht die Temperatur des Kochgeschirrbodens gemessen, sondern ein Spiess als Temperaturfühler in das Kochgut gesteckt, ein Verfahren, das wegen der Nachwärme im Kochgeschirrboden eine geringere Regelgenauigkeit ergibt und auch keinen Trockengehschutz bietet. Ausserdem ist eine besondereVorrichtung zum selbsttätigen Verschliessen der Lichtdurchtrittsöffnung in der Kochfläche bei Fortnahme des optischen Signalgebers und eine eigene Strömversorgung erforderlich, während der Erfindungsgegenstand vollen Trockengehschutz bietet sowie rein mechanisch und auf einer durchgehenden Kochfläche arbeitet. Auch sind schon Heizleistungen für Speisen durch Permanentmagnete und darauf ansprechende Kontakte geschaltet worden (WO 89/04543). Dabei wird jedoch der Permanentmagnet von Hand zu reinen Schaltzwecken bewegt, und nicht, wie bei der Erfindung, durch die Temperatur des Kochgeschirrbodens zum Zweck der Temperaturregelung.

Aus der DE 3828714 A1 ist es ausserdem bekannt, über ein Bimetall einen Magneten so über einem Reedkontakt zu bewegen, dass die Wärmeleistung in Abhängigkeit von einer vorgegebenen Temperatur ein- und ausgeschaltet wird.

Der flüssigkeitsgefüllte Ausdehnungskörper bzw. Temperaturfühler kann aussen am Kochgeschirrmantel in Bodennähe bzw. in einer Bodenbohrung angebracht und mit dem Permanentmagneten zu einer baulichen Einheit zusammengefasst sein, sodass ein solches Kochgeschirr mit Temperaturregelung als Einheit, ohne und mit Deckel, voll einsatzfähig ist.

Die Temperaturregelvorrichtung am Kochgeschirr und der Reedkontakt können auch mit umgekehrter Wirkungsweise ausgeführt werden, d.h. so, dass der Permanentmagnet die Kochleistung abschaltet, wenn er der Kochfläche oberhalb des Reedkontaktes angenähert wird. Auch kann anstelle einer Taktregelung eine stetige Regelung vorgesehen werden.

Um das Kochgeschirr herum können unter der Kochfläche mehrere Schaltstellen für verschiedene Leistungsstufen angeordnet sein, sodass die Kochgut-Temperaturregelvorrichtung je nach Drehstellung des Kochgeschirrs auf verschiedene Leistunggstufen der Stromversorgung einwirkt. Durch Einwirkung auf eine niedrigere Leistungsstufe können die Temperatur-Regelschwankungen im Kochgut vermindert werden.

In weiterer Ausbildung der Erfindung ist der im wesentlichen aus Temperaturfühler, Schaltmagnet und Temperatureinstellvorrichtung bestehende Thermostat nicht mehr als Griff des Kochgeschirrs, sondern als autonome Daueinheit ausgebildet, sodass er für Kochgeschirre verschiedener Grösse und Art (Töpfe, Kasserolen, Pfannen) verwendet werden kann, und am Kochgeschirr vorzugsweise durch ein am Thermostaten starr befestigtes, den Temperaturfühler enthaltendes Hüllrohr angebracht, das in die etwa bis zur Kochgeschirrmitte reichende oder sogar ganz durchgehende horizontale Bohrung im Kochgeschirrboden eingesteckt werden kann (Steckthermostat). Ferner sind lösbare Befestigungsmittel (Permanentmagnete, Schnappmechanismen, Schraubmechanismen und dergleichen) vorgesehen, die den Steckthermostaten am Kochgeschirr festhalten, wobei die Befestigungmittel so ausgebildet sein können, dass sie derart als Einschaltsperre wirken, dass die temperaturabhängige Lateralbewegung oder Drehbewegung des Schaltmagneten bzw. die Beeinflussung des Reedkontaktes durch den Schaltmagneten nur möglich ist, wenn der Steckthermostat vorschriftsmässig am Kochgeschirr befestigt ist.

In der Praxis hat es sich als vorteilhaft erwiesen, den am Kochgeschirr angebrachten Thermostaten als abnehmbaren Steckthermostaten auszubilden, um die Kochgeschirre zur Aufbewahrung ineinanderstellen sowie in der Geschirrspülmaschine besser unterbringen zu können. Ausserdem kann ein Steckthermostat wechselweise für verschiedene Kochgeschirre verwendet und auch im Falle eines Defelcts leicht ausgetauscht werden. Schliesslich ist so die Benutzung des Kochgeschirrs auch ohne Thermostat möglich.

Um einen flüssigkeitsgefüllten Wärmefühler am Steckthermostaten anbringen zu können ist ein starres Hüllrohr erforderlich, in das der Wärmefühler eingeschoben ist, da der an der Kapillare endende aktive Teil des Wärmefühlers aus Gründen der Wärmeankopplung ganz in der Bohrung des Kochgeschirrbodens verschwinden muss. Messungen haben ergeben, dass die durch das im Gehäuse des Steckthermostaten fest verankerte Hüllrohr verursachte Verzögerung des Wärmeübergangs nur geringfügig ist. Soll sie ganz vermieden werden, so kann in weiterer Ausbildung der Erfindung das Hüllrohr selbst als Temperaturfühler ausgebildet, d.h. unmittelbar mit der Flüssigkeit gefüllt und innen derart durch eine Trennwand geteilt sein, dass nur der vordere Teil Flüssigkeit enthält und die Kapillare bereits innerhalb des Hüllrohres an der Trennwand beginnt.

Der im Hüllrohr angeordnete Temperaturfühler kann auch als Dehnungsstange ausgebildet sein, die den Schaltmagneten temperaturabhängig bewegt und deren Temperaturausdehnungskoeffizient sich von demjenigen des Hüllrohres unterscheidet.

Zum Schalten eines Reedkontaktes muss die magnetische Erregung im Reedkontakt verändert werden. Dies kann entweder durch Veränderung der Entfernung des Schaltmagneten zum Reedkontakt (laterale Bewegung) oder durch Verändern des Winkels zwischen der Nord-Süd-Achse des Schaltmagneten und der Achse des Reedkontaktes (Drehbewegung) oder durch eine Kombination beider Bewegungsarten geschehen. Im Falle der Drehbewegung sind Platzbedarf und Energieaufwand zur Bewegung des Schaltmagneten im Steckthermostaten gegenüber der Lateralbewegung etwas reduziert.

Anstelle des Schaltmagneten kann im Steckthermostaten auch eine ferromagnetische Abschirmung zwischen Schaltmagnet und Reedkontakt temperaturabhängig bewegt werden.

Die Befestigung des Steckthermostaten am Kochgeschirr geschieht, sofern zumindest der Kochgeschirrboden ferromagnetisch ist, am einfachsten und zweckmässigsten durch zwei rechts und links vom Hüllrohr am Gehäuse des Steckthermostaten befestigte Permanentmagnete, die den Steckthermostaten gleichzeitig auch gegen Verdrehen sichern. Bei nicht magnetisierbaren Kochgeschirren müssen andere lösbare Befestigungsmittel wie Schnappmechanismen, Schraubmechanismen und dergleichen eingesetzt werden.

Um auszuschliessen, dass mit dem Steckthermostaten versehentlich die Kochleistung ohne Kochgeschirr eingeschaltet wird, können die Befestigungsmittel so ausgebildet sein, dass sie, z.B. durch Blockierung der Bewegung des Schaltmagneten, als Einschaltsperre wirken, solange der Steckthermostat nicht vorschriftsmässig am Kochgeschirr befestigt ist. Diese Einschaltsperre wird nicht benötigt, wenn das Kochfeld, wie dies heute vielfach der Fall ist, mit einer Topferkennungsvorrichtung ausgestattet ist, welche die Kochleistung selbsttätig abschaltet, wenn das Kochgeschirr vom Kochfeld entfernt wird.

Bei der praktischen Handhabung in der Küche muss, um das Funktionieren des Kochsystems zu gewährleisten, darauf geachtet werden, dass der Steckthermostat genügend genau über dem Reedkontakt plaziert wird, dessen Schaltfläche auf auf dem Kochfeld markiert ist. Zur Erleichterung der richtigen Plazierung des Steckthermostaten auf der markierten Reedkontakt-Schaltfläche kann das Kochfeld über dem Reedkontakt zusätzlich mit einem Höcker versehen sein, der in eine entsprechende Aussparung im Boden des Steckthermostaten eingreift. Eine noch bessere, allerdings auch etwas kostenaufwendigere Lösung besteht darin, die Reedkontakt-Schaltfläche durch mehrere, nebeneinander angeordnete, elektrisch parallel geschaltete Reedkontakte zu vergrössern. Dann kommt es auf eine genaue Plazierung des Steckthermostaten nicht mehr an.

Um eine möglichst genaue Regelung zu erreichen ist zu beachten, dass die Temperatur des Kochguts bzw. des Kochgeschirrbodens auch nach dem Abschalten der Kochleistung noch durch die vom Kochfeld ausgehende Nachwärme beeinflusst wird. Dieser Effekt spielt bei Induktionskochfeldern, bei denen ja die Kochleistung unmittelbar im Kochgeschirrboden erzeugt wird, keine Rolle, kann aber bei Cerankochfeldern mit konventioneller Beheizung durch die Kochfläche hindurch nicht mehr vernachlässigt werden. Hier kommt es darauf an, die Kochleistung schon vor Erreichen der Solltemperatur abzuschalten, sodass die Nachwärme aus dem Kochfeld dann gerade ausreicht, das Kochgut bzw. den Kochgeschirrboden vollends auf Solltemperatur zu bringen. Diese Aufgabe wird in weiterer Ausbildung der Erfindung dadurch gelöst, dass bereits beim ersten Anzeichen einer Bewegung des Schaltmagneten, d.h. bevor er die Position zur Abschaltung der Kochleistung erreicht hat, die Kochleistung abgeschaltet wird. Dies wird durch Ausbildung des Reedkontakts als Reedrelais und durch ein unter dem ICochfeld angeordnetes Zeitschaltglied bewirkt, das als Intervallschalter arbeitet und periodisch eine elektrische Gleichspannung für jeweils eine bestimmte Zeitspanne an die Spule des Reedrelais anlegt, deren Gleichstrom als schwache magnetische Gegenerregung zum Feld des Schaltmagneten auf den Reedkontakt einwirkt, die jedoch allein nicht ausreicht, den Reedkontakt zu betätigen. Sie bewirkt in Verbindung mit dem Feld des Schaltmagneten das Abschalten der Kochleistung, wenn der Schaltmagnet sich auch nur geringfügig aus der Einschaltposition in Richtung Abschaltposition bewegt hat. Wenn dann nach einer bestimmten Zeitspanne der Intervallschalter die Gegenerregung wieder abschaltet, hat der Schaltmagnet sich derart weiterbewegt, dass sein Magnetfeld am Ort des Reedkontakts nicht mehr ausreicht, die Kochleistung wieder einzuschalten. Der Schaltmagnet wird den Reedkontakt erst dann wieder zur Einschaltung der Kochleistung betätigen, wenn der Kochgeschirrboden sich wieder etwas abgekühlt und der Schaltmagnet sich in die Einschaltposition zurückbewegt hat. Mit anderen Worten kann man sagen, dass auf diese Weise die Abschaltposition des Schaltmagneten periodisch näher an die Einschaltposition herangeführt wird, was sich so auswirkt, als wäre die Hysterese des Reedkontaktes periodisch reduziert bzw. als sei die thermische Rückführung des Systems verstärkt, mit dem Ergebnis einer unübertrefflich genauen thermostatischen Regelung der Temperatur des Kochguts bzw. des Kochgeschirrbodens.

Wenn zur Vergrösserung der Reedkontakt-Schaltfläche mehrere elektrisch parallel geschaltete Reedkontakte nebeneinander angeordnet und als Reedrelais ausgeführt sind, dann müssen die Reedkontakte mit ihrer Achse unbedingt senkrecht zum Kochfeld stehen, sodass jeweils nur eine Anschlussfahne jedes Reedkontakts sich im Wirkungsbereich des Schaltmagneten befindet. Nur dann ist gewährleistet, dass das Feld des Schaltmagneten, unabhängig von seiner Plazierung, in allen Reedkontakten stets in der gleichen Richtung verläuft, und zwar entgegen der Richtung der periodisch angelegten Gleichstromerregung in den Spulen der Reedrelais.

### Ausführungsbeispiele

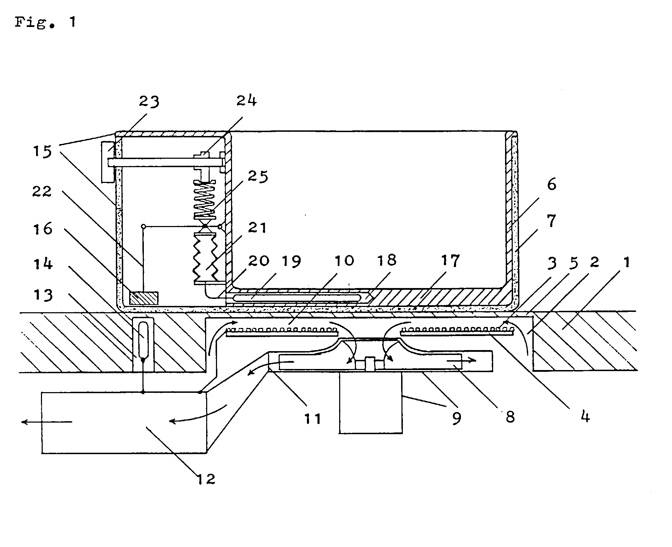

Die Fig.1 zeigt schematisch ein Beispiel für einen Systemaufbau nach der Erfindung. Die Küchenarbeitsplatte 1 weist von unten eine Ausfräsung 2 auf, in welche die Induktionsspule 3 mit dem Rückschlusskörper 4 für das Induktionsfeld auf einem gemeinsamen, nicht dargestellten Träger eingesetzt ist. Die Ausfräsung 2 wird nach oben durch die stehengebliebene Kochfläche 5 abgeschlossen. Auf der Kochfläche 5 steht das aus zur induktiven Erhitzung geeignetem Material bestehende Kochgeschirr 6. Auf Boden und Wände des Kochgeschirrs 6 ist von aussen die wärmeisolierende Schicht 7 aufgebracht. Dieses tischfreundliche Kochgeschirr, das die Speisen lange warm hält und keine Unterlage mehr verkratzt, kann man aussen überall anfassen ohne sich zu verbrennen. Der durch Pfeile angedeutete Kühlluftstrom wird vom Zentrum der Induktionsspule 3 her durch das geschlossene Radiallüfterrad 8 des Gebläses 9 angesaugt. Die Kühlluft tritt mit Raumtemperatur von der Peripherie her in den schmalen Spalt 10 zwischen der Induktionsspule 3 und der Unterseite der Kochfläche 5 ein. Die Ausblasöffnung 11 des Kühlgebläses 9 ist zur Indulctions-Stromversorgung 12, an welche die Induktionsspule 3 angeschlossen ist, geführt, sodass die darin befindlichen Bauteile vom gleichen Gebläse 9 ebenfalls gekühlt werden. Die Ausfräsung 2 kann so ausgeführt werden, dass an der Unterseite der Kochfläche 5 radial verlaufende Rippen (nicht dargestellt) stehen bleiben, die den Luftspalt 10 überbrücken und mit der Induktionsspule 3 verbunden bzw. verklebt werden. Durch diesen festen Verbund zwischen Kochfläche 5 und Induktionsspule 3 wird die Stabilität der Kochfläche 5 erhöht, ohne dass dadurch die Kühlluftströmung (Pfeile) nennenswert beeinträchtigt wird. Die Kühlwirkung wird durch die Rippen sogar noch verbessert.

In ein Sackloch 13 der Küchenarbeitsplatte 1 ist von unten der Reedkontakt 14 eingesetzt, der die Induktions-Stromversorgung 12 ein- und ausschalten kann. Oberhalb der Küchenarbeitsplatte 1 befindet sich darüber im Griff 15 des Kochgeschirrs 6 der Permanentmagnet 16, der je nach Abstand den Reedkontakt 14 schliesst oder öffnet. Das Kochgeschirr 6 weist einen zur induktiven Erhitzung geeigneten Boden 17 auf, der in an sich bekannter Weise zur Vergleichmässigung der Temperatur besonders dick (bis zu ca. 10 mm) ausgeführt ist. In den Boden 17 ist erfindungsgemäss die horizontale Bohrung 18 eingebracht, in die der flüssigkeitsgefüllte Temperaturfühler 19 eingeschoben ist, der über die Kapillare 20 auf den Ausdehnungskörper 21 einwirkt. Der Permanentmagnet 16 wird von dem Ausdehnungskörper 21 über das Gestänge 22 angehoben und betätigt den Reedkontakt 14, sobald die Temperatur den Sollwert überschreitet. Dieser Temperatur-Sollwert wird durch den Drehknopf 23 eingestellt, der über die Exzenterscheibe 24 die Vorspannung der Druckfeder 25 bestimmt. Die gesamte Mechanik ist in dem seitlich am Kochgeschirr 6 angesetzten Griff 15 untergebracht, der ebenfalls von der wärmeisolierenden Schicht 7 überzogen ist.

Die mit dieser Anordnung erzielbare Temperatur-Taktregelung des Kochgutes ist besonders feinfühlig, weil die an der Unterseite des Kochgeschirrbodens 17 erzeugte Wärme den Temperaturfühler 19 früher erreicht als das Kochgut.

Anstelle des Reedkontaktes 14 kann unter der Küchenarbeitsplatte 1 auch eine (nicht dargestellte) Magnetfeldmesseinrichtung angeordnet sein, die beim Anheben des Permanetmagneten 16 die Kochleistung mit zunehmender Distanz proportional reduziert und beim Absenken entsprechend wieder proportional erhöht. Die sich so ergebende stetige Temperaturregelung ist von unübertrefflicher Genauigkeit.

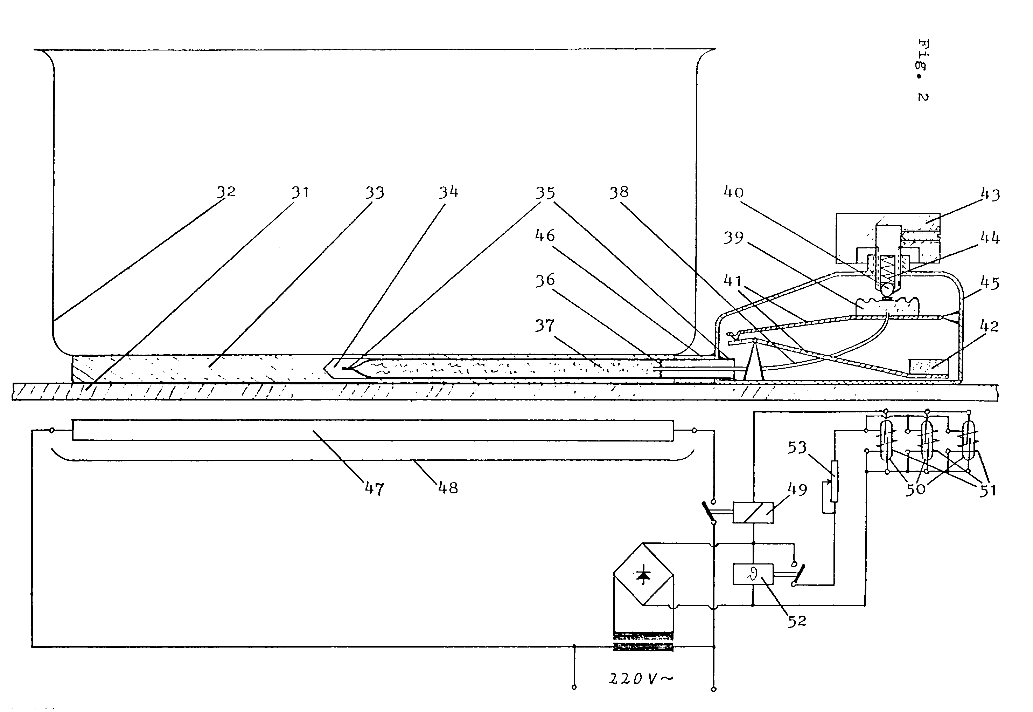

Die Fig. 2 zeigt ein Ausführungsbeispiel des Erfindungsgegenstandes mit konventioneller Beheizung und Steckthermostat. Auf dem Ceranfeld 31 steht das Kochgeschirr 32 mit dem Kochgeschirrboden 33, der in üblicher Weise als relativ dicke Sandwichkonstruktion ausgeführt ist und eine Bohrung 34 zur Aufnahme des Hüllrohres 35 des Steckthermostaten aufweist. Das Hüllrohr 35 ist selbst als Temperaturfühler ausgebildet und innen derart durch eine Trennwand 36 geteilt, dass nur der vordere Teil Flüssigkeit 37 enthält und die Kapillare 38 bereits innerhalb des Hüllrohres 35 an der Trennwand 36 beginnt. Die Kapillare 38 leitet die sich bei Temperaturerhöhung ausdehnende Flüssigkeit 37 in die Ausdehnungsdose 39, die sich an der Kugel 40 abstützt und über den die Ausdehnungsbewegung der Dose 39 stark übersetzenden Hebelmechanismus 41 den Schaltmagneten 42 temperaturabhängig anhebt und absenkt. Die Solltemperatur wird an dem Drehknopf 43 eingestellt. Um eine mechanische Überbeanspruchung der Ausdehnungsdose 39 und des Hebelmechanismus 41 zu vermeiden, wenn bei heissem Kochgeschirrboden 33 die Solltemperatur an dem Drehlcnopf 43 auf "kalt" gestellt wird, ist die Kugel 40 mit einer Feder 44 versehen, sodass sie bei Überlastung ausweichen kann. In dem Gehäuse 45 des Steckthermostaten, das zur Spülmaschinenfestigkeit wasserdicht ausgeführt sein kann, ist das Hüllrohr 35 starr verankert, z.B. eingelötet. Zur lösbaren Halterung des Steckthermostaten am Kochgeschirr 32 und als Verdrehungsschutz ist an seinem Gehäuse 45 zu beiden Seiten des Hüllrohres 35 je ein Permanentmagnet 46 befestigt.

So weit der rein mechanisch arbeitende Teil des Kochsystems nach der Erfindung, der oberhalb des Ceran-Kochfeldes 31 angeordnet ist.

Darunter befindet sich die elektrische Beheizung 47 des Kochfeldes 31 mit dem Reflektor 48, der die Kochleistung der Beheizung 47 nach oben lenkt. Die Beheizung 47 wird von dem Leistungsrelais 49 ein-und aus-geschaltet, das von den Reedkontakten 50 betätigt wird, die elektrisch parallel geschaltet sind. Zur Vergrösserung der Reedkontakt-Schaltfläche sind drei Reedkontakte 50 nebeneinander angeordnet, und man erkennt an der ungefähr masstäblich ausgeführten Figur, dass der Schaltmagnet 42 nach allen Seiten um ungefähr 1,5 cm verschoben werden kann, ohne seinen Einfluss auf die Reedkontakte 50 zu verlieren. Die Schaltfläche kann beliebig vergrössert werden.

Die drei Reedkontakte 50 sind senkrecht stehend nebeneinander unter dem Kochfeld 31 angeordnet und als Reedrelais ausgeführt, d.h. sie enthalten elektrische Spulen 51, durch die zur Beeinflussung des Schaltverhaltens ein Gleichstrom geschickt werden kann, der ein schwaches, dem Magnetfeld des Schaltmagneten 42 entgegengerichtetes Magnetfeld erzeugt. Das geschieht periodisch durch das als Intervallschalter arbeitende Zeitrelais 52, dessen Kontakt z.B. jeweils für 10 sec geschlossen und für 15 sec geöffnet ist. Diese Zeitkonstanten sind auf das konstruktionsbedingte Wärmeträgheitsverhalten des Kochfeldes 31 mit Heizung 47 und Reflektor 48 abzustimmen. Je träger das Kochfeld 31 ist, d.h. je länger die Nachwärme wirksam ist, umso grösser sollten die am Intervallschalter 52 eingestellten Zeitspannen sein. Die Höhe des Gleichstroms in den Spulen 51 und damit die Stärke des magnetischen Gegenfeldes kann an dem Stellwiderstand 53 reguliert werden und ist so einzustellen, dass bereits bei geringfügigem Abheben des Schaltmagneten 42 die Reedkontakte 50 öffnen, bei weiterer Entfernung des Schaltmagneten 42 von dem Gegenfeld allein aber nicht wieder geschlossen werden können.

Anstatt mit Relais kann selbstverständlich die Schaltung im Rahmen der meist im Herd ohnehin vorhandenen Elektronik mit noch geringerem Aufwand auch kontaktlos aufgebaut werden.

## Patentansprüche

1. Kochsystem, bestehend aus einem Induktions-Kochfeld, dessen Kochfläche (5) aus temperaturempfindlichen Material, vorzugsweise Holz, Kunststoff, Keramik, Schiefer, Marmor oder Granit besteht und von unten gekühlt ist, sowie einem zur induktiven Erhitzung geeigneten Kochgeschirr (6), dadurch gekennzeichnet, dass eine wärmeisolierende Schicht (7) zwischen Oberseite der Kochfläche (5) und dem sich erhitzenden Boden des Kochgeschirrs (6) angeordnet ist, und zwischen Induktionsspule (3) und Unterseite der Kochfläche (5) ein Spalt (10) vorhanden ist, in dem ein Kühlluftstrom durch ein druckstarkes Gebläse (8,9) bewirkt wird, das unmittelbar mit dem offenen Zentrum der Induktionsspule (3) verbunden ist, wobei das Gebläse (8,9) vorzugsweise mit seiner Ansaugöffnung an das offene Zentrum der Induktionsspule (3) anschliesst.

2. Kochsystem nach Anspruch 1, dadurch gekennzeichnet, dass die Ausblasseite (11) des Gebläses (8,9) in die Stromversorgung (12) für die Induktionsspule (3) geführt ist und die Kochfläche (5) auf ihrer Unterseite mit Rippen versehcn ist, die radial verlaufen und mit der Induktionsspule (3) verbunden sind.

3. Kochsystem nach den Ansprüchen 1-2, dadurch gekennzeichnet, dass unter dem Kochfeld mindestens ein magnetisch betätigbarer Kontakt (14) (Reedkontakt) als Schaltstelle für eine Leistungszufuhr angeordnet ist, und ein Temperaturfühler (19) vorgesehen ist, der seitlich am Boden oder in einer horizontalen Bohrung (18) im Boden des Kochgeschirrs (6) angeordnet ist und bei Erhitzung über eine eingestellte Temperatur hinaus über einen Ausdehnungskörper (21) einen seitlich am Kochgeschirr (6) angeordneten Permanentmagneten (16) bewegt und so den Kontakt (14) betätigt, der eine Kochleistung abschaltet, und der bei Unterschreiten der eingestellten Temperatur den Permanetmagneten (16) wieder zurückbewegt, sodass der Kontakt (14) die Kochleistung wieder einschaltet.

4. Kochsystem nach Anspruch 3, dadurch gekennzeichnet, dass der Permanentmagnet (16) der Kochgut-Temperatur-Regelvorrichtung je nach Drehstellung des Kochgeschirrs (6) auf verschiedene, unterschiedliche Leistungsstufen der Stromversorgung schaltende Kontakte (14) einwirkt.

5. Kochsystem nach Anspruch 3, dadurch gelcennzeichnet, dass einer im wesentlichen aus Temperaturfühler (35), Schaltmagnet (42) und Temperatureinstellvorrichtung (40,43) bestehende Thermostat als autonome Baueinheit ausgebildet ist, sodass er für Kochgeschirre verschiedener Größe und Art verwendet werden kann, und am Kochgeschirr (32) vorzugsweise durch ein am Thermostaten starr befestigtes, den Temperaturfühler enthaltendes Hüllrohr (35) angebracht wird, das in die etwa bis zur Kochgeschirrmitte reichende oder sogar ganz durchgehende horizontale Bohrung (34) im Kochgeschirrboden (33) eingesteckt werden kann, und dass lösbare Befestigungsmittel vorgesehen sind, die den Steckthermostaten am Kochgeschirr (32) festhalten, wobei die Befestigungsmittel so ausgebildet sein können, dass sie derart als Einschaltsperre wirken, dass die temperaturabhängige Lateralbewegung oder Drehbewegung des Schaltmagneten (42) bzw. die Beeinflussung des Reedkontaktes (50) durch den Schaltmagneten (42) nur möglich ist, wenn der Steckthermostat vorschriftsmässig am Kochgeschirr (32) befestigt ist.

6. Kochsystem nach Anspruch 5, gekennzeichnet durch ein Hüllrohr (35), das selbst als Temperaturfühler ausgebildet und innen derart durch eine Trennwand (36) geteilt ist, dass nur der vordere Teil Flüssigkeit (37) enthält und die Kapillare (38) bereits innerhalb des Hüllrohres (35) an der Trennwand (36) beginnt.

7. Kochsystem nach Anspruch 5, dadurch gekennzeichnet, dass der in dem Hüllrohr (35) angeordnete Temperaturfühler als Dehnungsstange ausgebildet ist, die den Schaltmagneten (42) temperaturabhängig bewegt und deren Temperaturausdehnungskoeffizient sich von demjenigen des Hüllrohres (35) unterscheidet.

8. Kochsystem nach Anspruch 5, dadurch gekennzeichnet, dass im Thermostaten nicht der Schaltmagnet (42), sondern eine ferromagnetische Abschirmung zwischen Schaltmagnet (42) und Reedkontakt (50) temperaturabhängig bewegt wird.

9. Kochsystem nach Anspruch 5, dadurch gekennzeichnet, dass zur Erleichterung der richtigen Plazierung des Steckthermostaten auf der Reedkontakt-Schaltfläche
- entweder das Kochfeld (31) über dem Reedkontakt (50) mit einem Höcker versehen ist, der in eine entsprechende Aussparung im Boden des Steckthermostaten eingreift,
- oder die Reedkontakt-Schaltfläche durch mehrere nebeneinander angeordnete, elektrisch parallel geschaltete Reedkontakte (50) vergrössert ist.

10. Kochsystem nach Anspruch 5, gekennzeichnet durch die Ausbildung des Reedkontaktes (50) als Reedrelais und ein unter dem Kochfeld (31) angeordnetes Zeitschaltglied (52), das als Intervallschalter arbeitet und periodisch eine elektrische Gleichspannung für jeweils eine bestimmte Zeitspanne an die Spule (51) des Reedrelais anlegt, deren Gleichstrom als schwache magnetische Gegenerregung zum Feld des Schaltmagneten (42) auf den Reedkontakt (50) einwirkt, die jedoch allein nicht ausreicht, den Reedkontakt (50) zu betätigen.

## Claims

1. Cooking system, consisting of an induction cooking hob which has a cooking surface (5) of temperature sensitive material, preferably of wood, plastic, ceramic, slate, marble or granite and which is cooled from below, as well as a cooking pot (6), suitable for inductive heating, which is characterised by a thermally insulating layer (7) arranged between the upper side of the cooking surface (5) and the heated bottom of the cooking pot (6), and a gap (10), present between the induction coil (3) and the lower side of the cooking surface (5), in which a cooling air flow is caused by a blower (8, 9) producing a strong pressure and joined directly with the open centre of the induction coil (3), whereby the blower (8, 9) is preferably joined with its suction aperture to the open centre of the induction coil (3).

2. Cooking system according to Claim 1, characterised in that the outlet end (11) of the blower (8, 9) is passed into the power supply (12) for the induction coil (3) and the cooking surface (5) provided with ribs on its lower side which are arranged radially and joined to the induction coil (3).

3. Cooking system according to Claims 1-2, characterised in that at least one magnetically operated contact (14) (reed contact) is arranged as switching point for a power feed and a temperature probe (19) is provided under the cooking surface, which is arranged at the side on the bottom or in a horizontal hole (18) in the bottom of the cooking pot (6) and on heating beyond a set temperature moves a permanent magnet (16) mounted on the side of the cooking pot via an expansion element (21), so operating the contact (14) which switches off a cooking power feed and which, on undercutting the set temperature, moves the permanent magnet (16) back so that the contact (14) switches on the cooking power.

4. Cooking system according to Claim 3, characterised in that the permanent magnet (16) of the cooked food temperature control device acts on various contacts (14) which switch different power stages of the power supply depending on the rotated position of the cooking pot (6).

5. Cooking system according to Claim 3, characterised in that a thermostat, mainly consisting of the temperature probe (35), switching magnet (42) and temperature setting device (40, 43), is formed as an autonomous component, so that it can be used for cooking pots of different size and type and is fitted to the cooking pot (32) preferably using a jacket tube (35) rigidly mounted on the thermostat and containing the temperature probe which can be inserted in the horizontal hole (34) in the bottom of the cooking pot (33) reaching approximately to the centre of the cooking pot or which even completely penetrates the bottom, and in that releasable mounting aids are provided which hold the insertion thermostat on the cooking pot (32), whereby the mounting aids can be so formed that they act as a type of switch-on block and the temperature dependent lateral movement or rotational movement of the switching magnet (42) or the influence on the reed contact (50) by the switching magnet (42) is only possible if the insertion thermostat is mounted properly on the cooking pot (32).

6. Cooking system according to Claim 5, characterised by a jacket tube (35) which itself forms the temperature probe and is divided internally by a partition (36) such that only the front part contains liquid (37) and the capillary (38) already begins within the jacket tube (35) at the partition (36).

7. Cooking system according to Claim 5, characterised in that the temperature probe arranged inside the jacket tube (35) is formed as an extensible rod which moves the switching magnet (42) depending on the temperature and its temperature expansion coefficient which differs from that of the jacket tube (35).

8. Cooking system according to Claim 5, characterised in that instead of the switching magnet (42) being moved in the thermostat, a ferromagnetic screen between the switching magnet (42) and the reed contact (50) is moved depending on the temperature.

9. Cooking system according to Claim 5, characterised in that to facilitate the correct positioning of the insertion thermostat on the reed contact switching surface
- either the cooking hob (31) above the reed contact (50) is provided with a hump which engages in a corresponding recess in the bottom of the insertion thermostat,
- or the reed contact switching surface is enlarged by a number of adjacently arranged reed contacts (50) electrically connected in parallel.

10. Cooking system according to Claim 5, characterised by the formation of the reed contact (50) as a reed relay and a timer (52) arranged under the cooking hob (31) which operates as an interval switch and which periodically applies an electrical direct voltage for a certain time interval to the coil (51) of the reed relay, the direct current of which acts as a weak magnetic counter-excitation to the field of the switching magnet (42) on the reed contact (50) but which is not itself sufficient to operate the reed contact (50).

## Revendications

1. Système de cuisson, composé d'une zone de cuisson à induction dont la surface de cuisson (5) se compose de matériau sensible à la température, de préférence du bois, du plastique, de la céramique, de l'ardoise, du marbre ou du granit, et qui est refroidie par le dessous, ainsi qu'un récipient de cuisson (6) adapté au chauffage par induction, caractérisé par le fait qu'une couche d'isolation thermique (7) est disposée entre le dessus de la surface de cuisson (5) et le fond chauffé du récipient de cuisson (6), et entre la bobine d'induction (3) et le dessous de la surface de cuisson (5) se trouve un espace (10) dans lequel est provoqué un courant d'air de refroidissement par un ventilateur (8, 9) à haute pression, lequel est relié directement au centre ouverte de la bobine d'induction (3), le ventilateur (8, 9) ventant de préférence se raccorder au centre ouverte de la bobine d'induction (3) par son orifice d'aspiration.

2. Système de cuisson selon la revendication 1, caractérisé par le fait que le côté soufflage (11) du ventilateur (8, 9) est acheminé dans l'alimentation électrique (12) de la bobine d'induction (3) et le dessous de la surface de cuisson (5) est muni de rainures qui s'étendent dans le sens radial et qui sont reliées à la bobine d'induction (3).

3. Système de cuisson selon les revendications 1 et 2, caractérisé par le fait qu'au moins un contact magnétique (14) (contact Reed) est prévu sous la zone de cuisson qui fait office de point de commutation pour une arrivée de puissance, et qu'il est prévu un capteur de température (19) qui est disposé latéralement sur le fond ou dans un orifice horizontal (18) dans le fond du récipient de cuisson (6) et qui, lorsqu'il s'échauffe au-dessus d'une température donnée, déplace par le biais d'un corps de dilatation (21) un aimant permanent (16) disposé sur le côté du récipient de cuisson (6) et actionne ainsi le contact (14) qui coupe la puissance de cuisson, et qui déplace à nouveau l'aimant permanent (16) lorsque la température devient inférieure à la température réglée de manière à ce que le contact (14) rétablisse la puissance de cuisson.

4. Système de cuisson selon la revendication 3, caractérisé par le fait que l'aiment permanent (16) du dispositif de régulation de la température de cuisson, suivant la position rotative du récipient de cuisson (6), agit sur différents contacts (14) qui commutent les différents étages de puissance de l'alimentation électrique.

5. Système de cuisson selon la revendication 3, caractérisé par le fait qu'un thermostat, composé essentiellement d'un capteur de température (35), d'un aimant de commutation (42) et d'un dispositif de réglage de la température (40, 43), est réalisé sous la forme d'une unité autonome de manière à pouvoir être utilisé pour des récipients de cuisson de différentes tailles et natures, et il est monté sur le récipient de cuisson (32), de préférence par un tube de gainage (35) fixé à demeure au thermostat et contenant le capteur de température, lequel peut être fiché dans l'orifice horizontal (34) qui s'éxtend environ jusqu'au centre ou même jusqu'au fond du récipient de cuisson (33), et que sont prévus des moyens de fixation amovibles qui maintiennent le thermostat enfichable sur le récipient de cuisson (32), les moyens de fixation pouvant être réalisés de telle façon qu'ils agissent comme des dispositifs de blocage de la mise sous tension de manière à ce que le mouvement latéral ou le mouvement rotatif de l'aimant de commutation (42) en fonction de la température ou l'influence du contact Reed (50) par l'aimant de commutation (42) n'est possible que si le thermostat enfichable est fixé au récipient de cuisson (32) conformément aux instructions.

6. Système de cuisson selon la revendication 5, caractérisé par un tube de gainage (35) qui est lui-même réalisé sous la forme d'un capteur de température et qui est séparé à l'intérieur par un paroi de séparation (36) de manière à ce que seule la partie avant contienne du liquide (37) et le capillaire (38) commence déjà à l'intérieur du tube de gainage (35) au niveau de la paroi de séparation (36).

7. Système de cuisson selon la revendication 5, caractérisé par le fait que le capteur de température logé dans le tube de gainage (35) est réalisé sous la forme d'une tige de dilatation qui déplace l'aimant de commutation (42) en fonction de la température et dont le coefficient de dilatation thermique est différent de celui du tube de gainage (35).

8. Système de cuisson selon la revendication 5, caractérisé par le fait que ce n'est pas l'aimant de commutation (42) qui est déplacé dans le thermostat en fonction de la température, mais un blindage ferromagnétique entre l'aimant de commutation (42) et le contact Reed (50).

9. Système de cuisson selon la revendication 5, caractérisé par le fait que pour faciliter le positionnement correct du thermostat enfichable sur la surface de commutation du contact Reed
- soit la zone de cuisson (31) au-dessus du contact Reed (50) est munie d'une bosse qui pénètre dans un évidement correspondant dans le fond du thermostat enfichable,
- soit la surface de commutation du contact Reed est agrandie par plusieurs contacts Reed (50) disposés les uns à côté des autres et branchés en parallèle.

10. Système de cuisson selon la revendication 5, caractérisé par la configuration du contact Reed (50) sous la forme d'un relais Reed et un commutateur temporisé (52) disposé sous la zone de cuisson (31), lequel fonctionne comme un commutateur cyclique et applique périodiquement une tension électrique continue pendant une période donnée à la bobine (51) du relais Reed, dont le courant continu agit sur le contact Reed (50) comme une faible contre-excitation magnétique au champ d'aimant permanent (42), lequel n'est cependant pas suffisant à lui tout seul pour actionner le contact Reed (50).
